# FASCICULE DE BREVET EUROPEEN

(11) **EP 1 712 407 B1**
(45) Date de publication et mention de la délivrance du brevet: **18.06.2008**
(21) Numéro de dépôt: 06290599.7
(22) Date de dépôt: 12.04.2006
(51) Int. Cl.: B60N 2/48

(54) **Appui-tête réglable en hauteur comprenant un élément de support unique**
In Höhe verstellbare Kopfstütze mit einem einzigen Trägerelement
Height adjustable headrest with a single support element.

(30) Priorité: 15.04.2005 FR 0503813
(43) Date de publication de la demande: 18.10.2006
(73) Titulaire: Centre d'etude et de recherche pour l'automobile (CERA), 51100 Reims (FR)
(72) Inventeur: Le Gall, François, 02130 Coulonges (FR)
(74) Mandataire: Sayettat, Julien Christian

(56) Documents cités:
- DE-A1- 10 157 516
- DE-A1- 19 731 059
- DE-A1- 19 947 621
- DE-A1-9102004 002 20
- DE-B3- 10 346 402

## Description

L'invention concerne un appui-tête pour siège de véhicule automobile, ainsi qu'un siège de véhicule automobile comprenant un tel appui-tête.

Il est connu de réaliser des appuis-tête solidaire du dossier et réglable en hauteur par rapport à celui-ci. De tels appuis-tête comprennent un corps en mousse monté sur une armature.

Selon une réalisation classique, l'armature peut comprendre deux broches, formant élément de support de l'appui-tête, saillant sous l'appui-tête et s'engageant dans des douilles complémentaires prévues dans la partie supérieure du dossier. Une telle réalisation est cependant peu esthétique et ne permet pas d'amener des organes du véhicule tels qu'un écran prévu sur la face arrière de l'appui-tête sans que la connectique de cet écran soit masquée sous l'appui-tête.

Selon une autre réalisation, l'armature comprend un élément de support unique sous la forme d'un mât s'engageant dans la partie supérieure du dossier. Le mât est généralement plein, ce qui ne permet pas d'amener la connectique de l'écran de façon masquée sous l'appui-tête. D'autre part, le réglage en hauteur de l'appui-tête se fait au moyen de crans prévus dans le mât et coopérant avec un organe de blocage solidaire du dossier. Dans ce cas, le réglage de la hauteur de l'appui-tête se fait par un bouton prévu sur le dossier. Cependant, la disposition du bouton n'est pas ergonomique car celui-ci est difficilement accessible à l'occupant du siège lorsqu'il est assis dessus.

L'invention vise à pallier ces inconvénients en proposant un appui-tête particulièrement esthétique comprenant un élément de support unique dans lequel des organes du véhicule peuvent passer afin d'être invisibles depuis l'extérieur de l'appui-tête et dont la hauteur est réglée au moyen d'un bouton disposé de façon ergonomique et facilement accessible à l'occupant du siège.

A cet effet et selon un premier aspect, l'invention concerne un appui-tête pour siège de véhicule automobile selon la revendication 1.

On connaît par ailleurs du document DE-197 31 059 un appui-tête selon le préambule de la revendication 1, dans lequel deux broches sont prévues pour être montées dans respectivement un évidement.

Ainsi, les moyens de blocage réversibles de la translation sont disposés dans l'appui-tête et non pas dans le dossier, ce qui permet de prévoir un réglage de la hauteur de l'appui-tête accessible facilement pour l'occupant du siège.

Selon une réalisation particulière, l'élément de support est disposé dans un boîtier, des espaces étant prévus entre l'élément de support et le boîtier de sorte à permettre de faire passer des organes fonctionnels du véhicule dans lesdits espaces.

Ainsi, les organes peuvent être invisibles depuis l'extérieur de l'appui-tête. Notamment les câbles de connectique d'un écran prévu dans la face arrière de l'appui-tête peuvent passer dans les espaces prévus et non pas à l'extérieur de l'appui-tête.

Selon un deuxième aspect, l'invention concerne un siège de véhicule automobile comprenant un dossier et une assise, ledit siège comprenant un appui-tête tel que décrit ci-dessus, le dossier comprenant des moyens de retenue réversibles de l'appui-tête, lesdits moyens coopérant de façon réversible avec les moyens de fixation réversibles de l'appui-tête au dit dossier.

D'autres objets et avantages de l'invention apparaîtront au cours de la description qui suit, faite en référence aux dessins annexés.
La figure 1 est une représentation schématique de face d'un appui-tête selon l'invention associé à un dossier de véhicule automobile.
La figure 2 est une représentation schématique en coupe la structure interne de l'appui-tête associé à une armature du dossier du siège, l'appui-tête étant dans sa position haute extrême.
La figure 3 est une représentation schématique en coupe de la structure interne de l'appui-tête associé à une armature du dossier du siège, l'appui-tête étant dans sa position de montage.
La figure 4 est une représentation schématique partielle en perspective de la structure interne de l'appui-tête associé à une armature du dossier du siège, l'appui-tête étant à une hauteur intermédiaire.
La figure 5 est une représentation schématique partielle en perspective de la structure interne de l'appui-tête montrant les moyens de fixation réversibles au dossier du siège.

Dans la description, le terme longitudinal est défini par rapport à la direction d'élévation de l'appui-tête, les termes «sous » et « au-dessus » sont définis par rapport à cette direction.

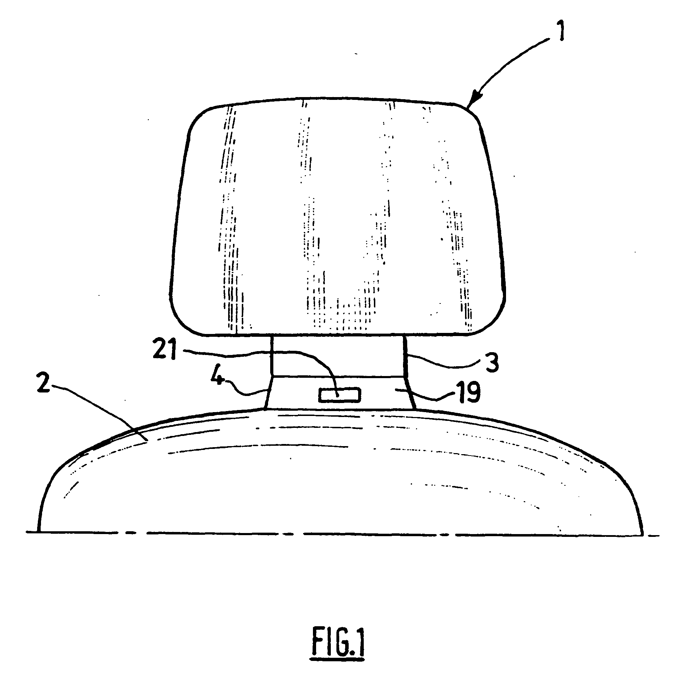

En référence à la figure 1, on décrit un appui-tête 1 destiné à être associé au dossier 2 d'un siège de véhicule automobile. A cet effet, l'appui-tête 1 comprend un élément de support 3 comprenant des moyens de fixation réversibles 4 au dossier 2. L'appui-tête 1 comprend en outre un corps en mousse formant la surface d'appui de la tête pour l'occupant du siège.

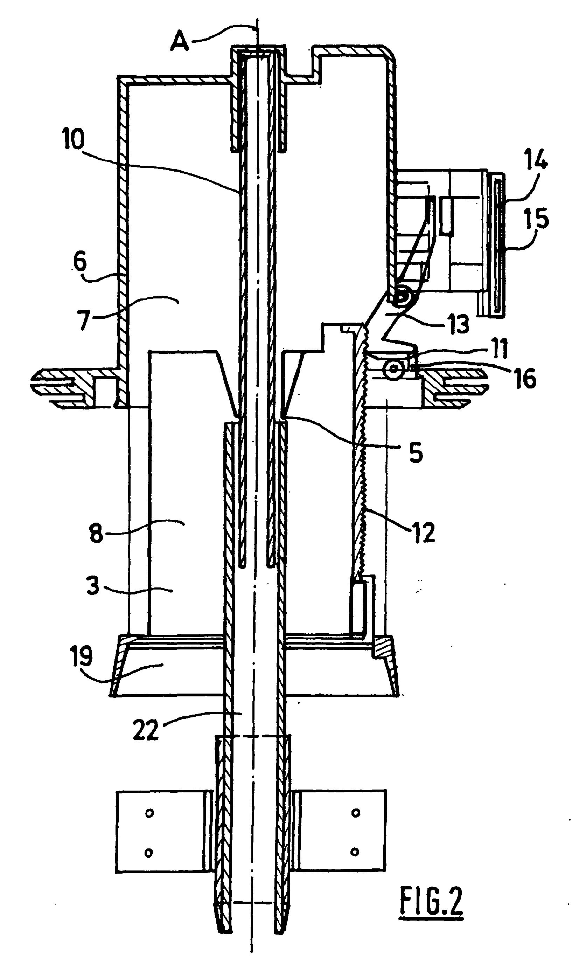

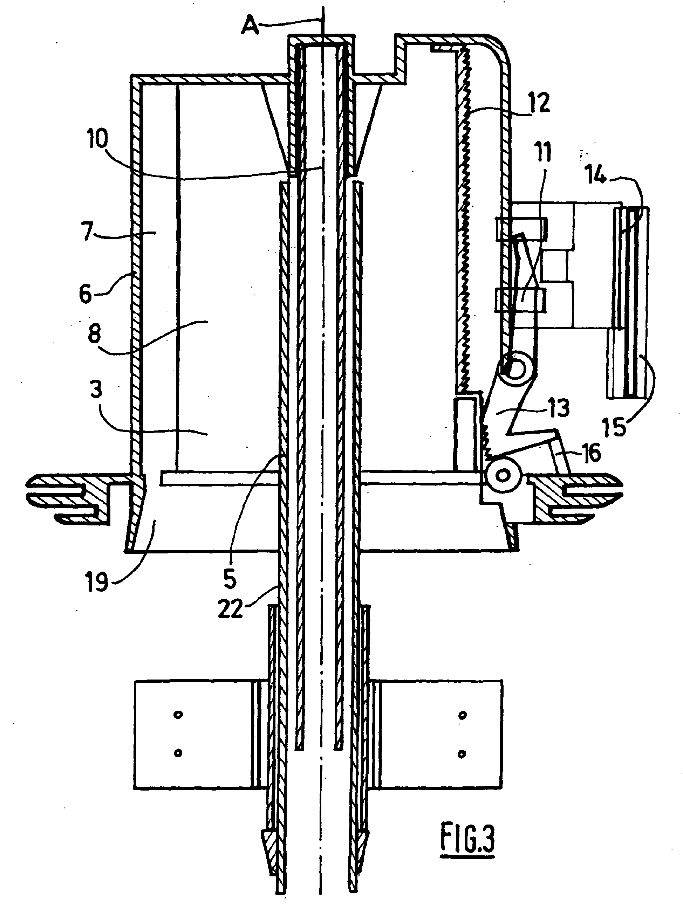

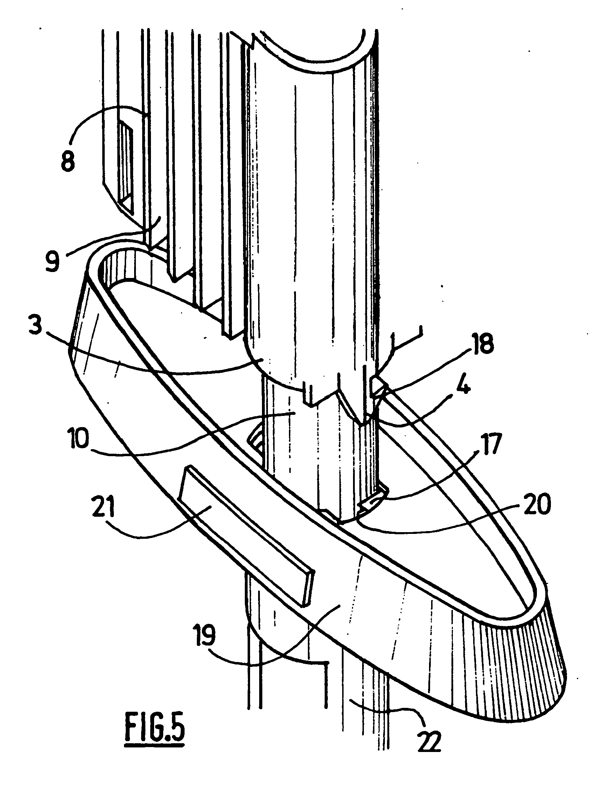

L'élément de support 3 forme un « mât » unique s'étendant sous l'appui-tête 1. L'élément de support 3 comprend une pièce monobloc 8, par exemple en matériau plastique injecté et un boîtier entourant ladite pièce monobloc. Comme représenté sur la figure 5, la pièce monobloc est agencée pour qu'il y ait des espaces entre le boîtier et la pièce monobloc. A cet effet, la pièce monobloc 8 présente par exemple des nervures 9. Les espaces permettent de faire passer de faire passer des organes fonctionnels du véhicule vers l'appui-tête du véhicule tels que la connectique d'un écran prévu sur la face arrière de l'appui-tête 1 par exemple. La pièce monobloc 8 comprend un évidement 5 s'étendant selon un axe A sensiblement longitudinal, comme représenté sur les figures 2 et 3. L'évidement 5 traverse l'élément de support 3 sensiblement dans sa partie centrale. L'évidement 5 peut s'évaser dans sa partie supérieure comme représenté sur les figures 2 et 3.

Le boîtier est la seule partie de l'élément de support 3 visible de l'extérieur de l'appui-tête 1, ce qui permet de conférer une bonne esthétique à celui-ci, comme représenté sur la figure 1.

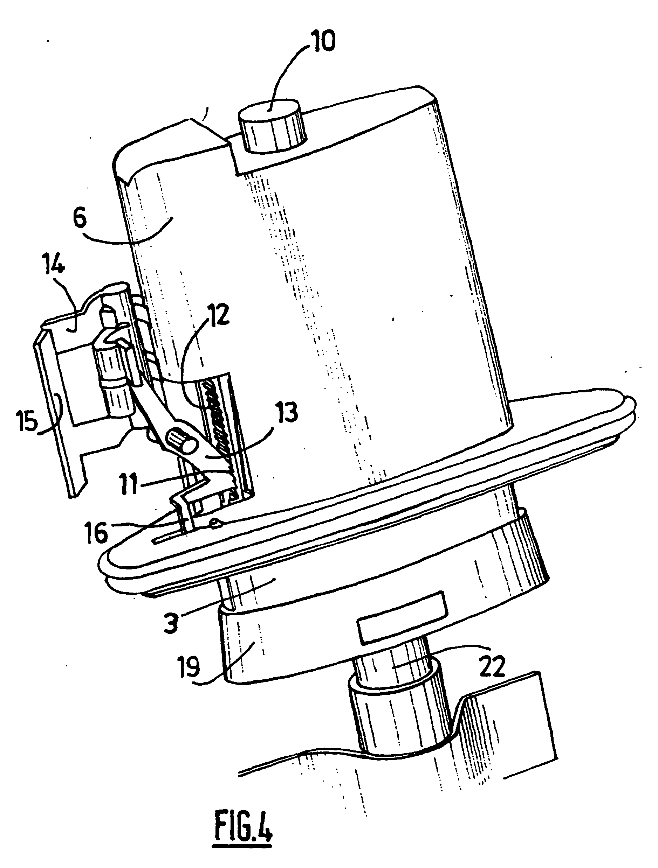

Un carter 6 est monté en translation longitudinale à l'élément de support 3. La translation se fait selon l'axe A. A cet effet, le carter 6 définit un logement 7 présentant une forme sensiblement complémentaire de celle de l'élément de support 3. L'élément de support 3 peut donc entrer dans le carter 6. Le corps en mousse est disposé autour du carter 6. Pour des raisons de simplicité, le corps en mousse n'est pas représenté sur les figures 2 à 5. Le carter 6 peut présenter une partie de forme complémentaire de l'évasement de l'évidement 5.

Une broche 10 s'étend sensiblement longitudinalement à l'intérieur du logement 7. La broche 10 est solidaire de la partie supérieure du carter 6 et est montée en translation longitudinale dans l'évidement 5 selon un axe sensiblement parallèle à l'axe A. La broche 10 peut présenter une longueur agencée pour que la broche 10 pénètre dans le dossier 2 lorsque l'appui-tête 1 est dans une position basse de réglage. Une telle longueur permet de prévoir une plage de réglage en hauteur importante de l'appui-tête 1, comme représenté sur la figure 2. La broche 10 étant invisible de l'extérieur de l'appui-tête, aucun traitement ou usinage particulier de celle-ci n'est nécessaire afin de la rendre plus esthétique contrairement aux appuis-tête montés sur une ou deux broches apparentes. Des économies dans les coûts de fabrication peuvent ainsi être réalisés, l'usinage d'une broche métallique étant coûteux.

L'appui-tête 1 comprend en outre des moyens de blocage réversibles 11 de la translation du carter 6 par rapport à l'élément de support 3 et/ou de la broche 10 par rapport à l'évidement 5. L'appui-tête 1 comprend également un moyen de désengagement 14 des moyens de blocage 11 de sorte à libérer la translation du carter 6 par rapport à l'élément de support 3 et/ou de la broche 10 par rapport à l'évidement 5.

Selon la réalisation représentée sur les figures, les moyens de blocage réversibles 11 de la translation du carter 6 par rapport à l'élément de support 3 comprennent une crémaillère 12 solidaire de l'élément de support 3 et s'étendant selon une direction sensiblement parallèle à l'axe A. La crémaillère est par exemple fixée sur un des bords de la pièce monobloc 8, comme représenté sur les figures. La longueur de la crémaillère 12 définit la plage de réglage en hauteur de l'appui-tête. Les moyens de blocage 11 comprennent en outre une pièce de coopération 13 avec la crémaillère 12. La pièce 13 est solidaire du carter 6 et est mobile en rotation entre une position de réglage, dans laquelle elle est écartée de la crémaillère 12 et permet la translation du carter 6 par rapport à l'élément de support 3 de sorte à permettre le réglage en hauteur de l'appui-tête 1, et une position de blocage, dans laquelle elle coopère avec la crémaillère 12 et bloque la translation du carter 6 par rapport à l'élément de support 3 de sorte à fixer la hauteur de l'appui-tête 1.

La rotation de la pièce de coopération 13 est commandée par un bouton 15 formant moyen de désengagement 14 des moyens de blocage 11. Le bouton 15 disposé à proximité de la paroi externe du corps en mousse. Le bouton 15 peut être disposé sous la coiffe (non représentée) du corps en mousse afin d'améliorer encore l'esthétisme de l'appui-tête. Selon une réalisation, la coiffe comprend un pictogramme en relief en regard du bouton 15 afin d'indiquer sa position à l'occupant du siège. Le bouton 15 est disposé à un endroit facilement accessible à la main de l'occupant du siège lorsque celui-ci est assis. A cet effet, on prévoit par exemple de disposer le bouton sur l'un des côtés de l'appui-tête comme représenté sur les figures. Le bouton 15 est agencé pour entraîner la rotation de la pièce de coopération 13 vers sa position de réglage lorsqu'il est actionné. Les moyens de blocage 11 de la translation du carter 6 par rapport à l'élément de support 3 comprennent en outre un moyen de rappel (non représenté) de la pièce 13 dans sa position de blocage lorsque le bouton 15 n'est pas actionné. Ce moyen de rappel est par exemple un ressort monté autour de l'axe de rotation de la pièce 13. Ainsi, pour régler la hauteur de l'appui-tête 1, l'occupant du siège appuie sur le bouton 15 puis choisi la hauteur d'appui-tête qu'il désire, lorsque le réglage lui convient, il relâche le bouton et la pièce 13 vient en prise avec la crémaillère 12, bloquant ainsi la translation du carter 6 par rapport à l'élément de support 3 et fixant la hauteur de l'appui-tête.

Selon une réalisation, la pièce 13 est en outre mobile vers une position de montage dans laquelle elle est écartée de la crémaillère 12 et peut descendre plus bas que celle-ci de sorte à amener l'appui-tête 1 vers une position basse extrême de montage dans le véhicule. Cette position est représentée sur la figure 3. Cette position permet de faire descendre l'appui-tête 1 plus bas que sa hauteur minimale de sécurité lorsque l'appui-tête 1 est utilisé. Cette hauteur minimale facilite le montage de l'appui-tête 1 dans le véhicule automobile. Le passage dans cette position n'est pas commandé par le bouton 15 car l'occupant du siège ne doit pas pouvoir faire descendre l'appui-tête plus bas que la hauteur minimale de sécurité. Un autre bouton 16 solidaire de la pièce de coopération 13, disposé par exemple sous l'appui-tête comme représenté sur les figures, commande le passage à la position de montage. Ce bouton 16 est utilisé uniquement lors du montage ou du démontage de l'appui-tête 1.

Selon une réalisation non représentée, les moyens de blocage 11 peuvent être agencé pour bloquer la translation de la broche 10 par rapport à l'évidement 5 . Les moyens de blocage 11 comprennent alors une pièce de blocage solidaire du carter. Cette pièce de blocage peut être mobile en rotation ou en translation entre une position de réglage dans laquelle la pièce de blocage est écartée de la broche 10 et permet la translation de la broche 10 par rapport à l'évidement 5 de sorte à permettre le réglage en hauteur de l'appui-tête 1, et une position de blocage, dans laquelle elle coopère avec la broche 10 et bloque la translation de la broche 10 par rapport à l'évidement 5 de sorte à fixer la hauteur de l'appui-tête 1. Selon cette réalisation, les moyens de blocage 11 de la broche 10 peuvent être des moyens de blocage classiques d'une broche dans un appui-tête monté sur deux broches.

Le moyen de désengagement 14 de ces moyens de blocage 11 comprend un bouton disposé à proximité de la paroi externe du corps en mousse. Ce bouton peut être de type similaire à celui décrit ci-dessus. Ce bouton est agencé pour entraîner la déplacement de la pièce de blocage vers sa position de réglage lorsqu'il est actionné. Les moyens de blocage 11 de la translation de la broche 10 par rapport à l'évidement 5 comprennent alors en outre un moyen de rappel de la pièce de blocage dans sa position de blocage lorsque le bouton n'est pas actionné.

On décrit à présent un siège de véhicule automobile comprenant un dossier 2 et une assise ainsi qu'un appui-tête tel que décrit ci-dessus.

Le dossier 2 comprend des moyens de retenue réversibles 17 de l'appui-tête 1. Ces moyens 17 coopèrent de façon réversible avec les moyens de fixation réversibles 4 de l'appui-tête 1 au dossier 2.

Selon la réalisation représentée sur la figure 5, les moyens de fixation 4 comprennent au moins une patte 18 solidaire de l'élément de support 3 et s'étendant sensiblement longitudinalement sous cet élément. La patte 18 est par exemple formée d'une seule pièce avec la pièce monobloc 8 à proximité de l'évidement 5. Selon une réalisation, les moyens de fixation 4 comprennent deux pattes 18 disposées de part et d'autre de l'évidement 5. La patte 18 coopère de façon réversible avec les moyens de retenue 17 du dossier 2.

Selon une réalisation non représentée, l'élément de support 3 comprend un bouton solidaire de la patte 18. Ce bouton est agencé pour dégager la patte 18 des moyens de retenue 5 du dossier 2 afin de désolidariser l'appui-tête 1 du dossier 2. Dans ce cas, les moyens de retenue 5 comprennent un rebord prévu dans la partie supérieure du dossier 2 et derrière lequel la patte 18 s'engage lorsque l'appui-tête 1 est fixé au dossier 2. Le bouton saille hors du boîtier de sorte à être accessible de l'extérieur de l'appui-tête 1. Selon la réalisation où deux pattes 18 sont prévues, deux boutons actionnant chacun une patte 18 peuvent être prévus.

Selon une autre réalisation, représentée sur les figures, les moyens de retenue 17 comprennent un socle 19 prévu dans la partie supérieure du dossier 2. L'élément de support 3 est alors disposé dans le socle 19 lorsque l'appui-tête est solidaire du dossier 2. Le socle comprend une pièce de retenue 20 mobile en translation entre une position de retenue dans laquelle la pièce 20 coopère avec la patte 18 de sorte à fixer l'appui-tête 1 au dossier 2 et une position de libération dans laquelle la pièce 20 est écartée de la patte 18 de sorte à désolidariser l'appui-tête 1 du dossier 2. La pièce de retenue 20 est actionnée par un bouton 21 prévu dans le socle 19 et agencé pour placer la pièce de retenue 20 dans sa position de libération. Un moyen de contrainte (non représenté) est alors prévu pour ramener la pièce dans sa position de retenue lorsque le bouton n'est pas sollicité.

Afin que l'appui-tête soit fermement maintenu par rapport au dossier 2, notamment en cas de choc, un élément tubulaire 22 solidaire de l'élément de support 3 et plongeant dans le dossier 2 peut être prévu, comme représenté sur les figures. L'élément tubulaire 22 est par exemple associé de façon réversible à l'armature du dossier 2. On évite ainsi que l'appui-tête 1 puisse s'éjecter en cas de choc.

## Revendications

1. Appui-tête pour siège de véhicule automobile comprenant un élément de support (3), ledit élément comprenant des moyens de fixation réversibles (4) au dossier (2) du siège, l'appui-tête (1) comprenant en outre un carter (6) autour duquel un corps en mousse est disposé, le carter (6) étant monté en translation sur l'élément de support (3) selon un axe longitudinal (A), l'élément de support (3) étant pourvu d'un évidement (5), l'appui-téte (1) comprenant en outre une broche (10) solidaire de la partie supérieure du carter (6), ladite broche étant montée en translation dans l'évidement (5) selon un axe sensiblement parallèle à l'axe (A), l'appui-tête (1) comprenant en outre des moyens de blocage (11) réversibles de la translation du carter (6) par rapport à l'élément de support (3) et/ou de la broche (10) par rapport à l'évidement (5), ledit appui-tête étant **caractérisé en ce que** les moyens de blocage (11) de la translation du carter (6) par rapport à l'élément de support (3) comprennent une crémaillère (12) solidaire de l'élément de support (3) et s'étendant selon une direction sensiblement parallèle à l'axe (A), les moyens de blocage (11) comprenant en outre une pièce de coopération (13) avec la crémaillère (12), ladite pièce étant solidaire du carter (6), ladite pièce étant mobile en rotation entre une position de réglage, dans laquelle elle est écartée de la crémaillère (12) et permet la translation du carter (6) par rapport à l'élément de support (3) de sorte à permettre le réglage en hauteur de l'appui-tête (1), et une position de blocage, dans laquelle elle coopère avec la crémaillère (12) et bloque la translation du carter (6) par rapport à l'élément de support (3) de sorte à fixer la hauteur de l'appui-tête (1), la longueur de la crémaillère (12) définissant la plage de réglage en hauteur de l'appui-tête (1).

2. Appui-tête selon la revendication 1, **caractérisé en ce qu'**il comprend en outre un moyen de désengagement (14) des moyens de blocage (11) de sorte à libérer la translation du carter (6) par rapport à l'élément de support (3) et/ou de la broche (10) par rapport à l'évidement (5).

3. Appui-tête selon la revendication 2, **caractérisé en ce que** le moyen de désengagement (14) des moyens de blocage (11) comprend un bouton (15) disposé à proximité de la paroi externe du corps en mousse, ledit bouton étant agencé pour entraîner la rotation de la pièce de coopération (13) vers sa position de réglage lorsqu'il est actionné, les moyens de blocage (11) de la translation du carter (6) par rapport à l'élément de support (3) comprenant en outre un moyen de rappel de la pièce (13) dans sa position de blocage lorsque le bouton (15) n'est pas actionné.

4. Appui-tête selon la revendication 2 ou 3, **caractérisé en ce que** la pièce (13) est en outre mobile vers une position de montage dans laquelle elle est écartée de la crémaillère (12) et peut descendre plus bas que celle-ci de sorte à amener l'appui-tête (1) vers une position basse extrême de montage dans la véhicule.

5. Appui-tête selon l'une quelconque des revendications 1 à 4, **caractérisé en ce que** les moyens de blocage (11) de la translation de la broche (10) par rapport à l'évidement (5) comprennent une pièce de blocage solidaire du carter (6), ladite pièce de blocage étant mobile entre une position de réglage dans laquelle la pièce de blocage est écartée de la broche (10) et permet la translation de la broche (10) par rapport à l'évidement (5) de sorte à permettre le réglage en hauteur de l'appui-tête (1), et une position de blocage, dans laquelle elle coopère avec la broche (10) et bloque la translation de la broche (10) par rapport à l'évidement (5) de sorte à fixer la hauteur de l'appui-tête (1).

6. Appui-tête selon la revendication 5 lorsqu'elle dépend de la revendication 2, **caractérisé en ce que** le moyen de désengagement (14) des moyens de blocage (11) comprend un bouton disposé à proximité de la paroi externe du corps en mousse, ledit bouton étant agencé pour entraîner le déplacement de la pièce de blocage vers sa position de réglage lorsqu'il est actionné, les moyens de blocage (11) de la translation de la broche (10) par rapport à l'évidement (5) comprenant en outre un moyen de rappel de la pièce de blocage dans sa position de blocage lorsque le bouton n'est pas actionné.

7. Appui-tête selon l'une quelconque des revendications 1 à 6, **caractérisé en ce que** l'élément de support (3) comprend une pièce monobloc (8) disposée dans un boîtier, des espaces étant prévus entre la pièce monobloc (8) et le boîtier de sorte à permettre de faire passer des organes fonctionnels du véhicule dans lesdits espaces.

8. Siège de véhicule automobile comprenant un dossier (2) et une assise, **caractérisé en ce qu'**il comprend un appui-tête (1) selon l'une quelconque des revendications 1 à 7, le dossier (2) comprenant des moyens de retenue (17) réversibles de l'appui-tête (1), lesdits moyens coopérant de façon réversible avec les moyens de fixation réversibles (4) de l'appui-tête (1) au dit dossier.

9. Siège selon la revendication 8, **caractérisé en ce que** les moyens de fixation (11) comprennent au moins une patte (18) solidaire de l'élément de support (3) et s'étendant sensiblement longitudinalement sous ledit élément, ladite patte coopérant de façon réversible avec les moyens de retenue (17) du dossier (2).

10. Siège selon la revendication 9, **caractérisé en ce que** l'élément de support (3) comprend un bouton solidaire de la patte (18), ledit bouton étant agencé pour dégager la patte (18) des moyens de retenue (17) du dossier (2) afin de désolidariser l'appui-tête (1) du dossier (2) lorsqu'il est actionné.

11. Siège selon la revendication 9, **caractérisé en ce que** les moyens de retenue (17) comprennent un socle (19) prévu dans la partie supérieure du dossier (2), l'élément de support (3) étant disposé dans ledit socle, ledit socle comprenant une pièce de retenue (20) mobile en translation entre une position de retenue dans laquelle ladite pièce coopère avec la patte (18) de sorte à fixer l'appui-tête (1) au dossier (2) et une position de libération dans laquelle ladite pièce est écartée de la patte (18) de sorte à désolidariser l'appui-tête (1) du dossier (2).

## Claims

1. Head rest for automobile vehicle seat comprising a support part (3), wherein said part comprises reversible attachment means (4) to the back (2) of the seat, wherein the head rest (1) further comprises a casing (6) around which a foam body is positioned, wherein the casing (6) is mounted in translation on the support part (3) according to a longitudinal axis (A), wherein the support part (3) is equipped with a recess (5), wherein the head rest (1) further comprises a rod (10) that is attached to the upper part of the casing (6), wherein said rod is mounted in translation in the recess (5) according to an axis that is substantially parallel to the axis (A), wherein the head rest (1) further comprises reversible means (11) of locking the translation of the casing (6) with respect to the support part (3) and/or the rod (10) with respect to the recess (5), wherein said head rest is **characterised in that** the means (11) of locking of the translation of the casing (6) with respect to the support part (3) comprise a toothed section (12) attached to the support part (3) and extending in a direction substantially parallel to the axis (A), wherein the means (11) of locking further comprise a part (13) which engages with the toothed part (12), wherein said part is attached to the casing (6), wherein said part is mobile in rotation between an adjustment position in which it is moved away from the toothed part (12) and permits the translation of the casing (6) with respect to the support part (3) so that the head rest (1) may be adjusted in height, and a locked position in which it engages with the toothed part (12) and blocks the translation of the casing (6) with respect to the support part (3) so as to set the height of the head rest (1), wherein the length of the toothed part (12) defines the range of height adjustment of the head rest (1).

2. Head rest of claim 1, **characterised in that** it further comprises a means (14) of disengaging the means (11) of locking so as to free the translation of the casing (6) with respect to the support part (3) and/or the rod (10) with respect to the recess (5).

3. Head rest of claim 2, **characterised in that** the means (14) of disengaging the means (11) of locking comprise a knob (15) positioned close to the external wall of the foam body, wherein said knob is designed to rotate the part (13) which engages towards iLs adjustment position when it is actuated, wherein the means (11) of locking the translation of the casing (6) with respect to the support part (3) further comprise means for recalling the part (13) to its locked position when the knob (15) is not actuated.

4. Head rest of any of claims 2 or 3, **characterised in that** the part (13) may further be moved towards an assembly position in which it is moved away from the toothed part (12) and may descend below the latter so that it moves the head rest (1) into an extreme lower assembly position in the vehicle.

5. Head rest of any of claims 1 to 4, **characterised in that** the means (11) of locking the translation of the rod (10) with respect to the recess (5) comprise a locking part that is attached to the casing (6), wherein said locking part can be moved between an adjustment position in which the locking part is moved away from the rod (10) and permits the translation of the rod (10) with respect to the recess (5) so as to allow the height adjustment of the head rest (1), and a locked position in which it engages with the rod (10) and blocks the translation of the rod (10) with respect to the recess (5) so as to set the height of the head rest (1).

6. Head rest of claim 5, when it depends on claim 2, **characterised in that** the means (14) of disengaging the means (11) of locking comprise a knob positioned close to the external wall of the foam body, wherein said knob is designed to move the locking part towards its adjustment position when it is actuated, wherein the means of locking (11) the translation of the rod (10) with respect to the recess (5) further comprise means for recalling the locking part to its locked position when the knob is not actuated.

7. Head rest of any of claims 1 to 6, **characterised in that** the support part (3) comprises a one-piece part (8) located in a casing, wherein spaces are provided between the one-piece part (8) and the casing so as to allow operating parts of the vehicle to pass in said spaces.

8. Automobile vehicle seat comprising a back (2) and a seat, **characterised in that** it comprises a head rest (1) according to any of claims 1 to 7, wherein the back (2) comprises reversible means (17) of retaining the head rest (1), wherein said means can be engaged reversibly with the reversible means (4) of attaching the head rest (1) to said back.

9. Seat of claim 8, **characterised in that** the means (11) of attachment comprise at least one bracket (18) attached to the support part (3) which extends substantially longitudinally under said part, wherein said bracket engages reversibly with the retaining means (17) of the back (2).

10. Seat of claim 9, **characterised in that** the support part (3) comprises a knob attached to the bracket (18), wherein said knob is designed to clear the bracket (18) from the retaining means (17) of the back (2) so as to detach the head rest (1) from the back (2) when it is actuated.

11. Seat of claim 9, **characterised in that** the retaining means (17) comprise a base (19) fitted in the upper part of the back (2), wherein the support part (3) is fitted in said base, wherein said base comprises a retaining part (20) that is mobile in translation between a retained position in which said part engages with the bracket (18) to attach the head rest (1) to the back (2) and a free position in which said part is moved away from the bracket (18) so as to detach the head rest (1) from the back (2).

## Patentansprüche

1. Kopfstütze für den Sitz eines Kraftfahrzeuges, umfassend ein Tragelement (3), wobei das Element reversible Mittel zur Befestigung (4) an der Lehne (2) des Sitzes umfasst, wobei die Kopfstütze (1) des Weiteren ein Gehäuse (6) umfasst, um welches herum ein Schaumkörper angeordnet ist, wobei das Gehäuse (6) auf dem Tragelement (3) gemäß einer Längsachse (A) verschiebbar montiert ist, wobei das Tragelement (3) mit einer Aussparung (5) ausgestattet ist, wobei die Kopfstütze (1) des Weiteren einen Stift (10) umfasst, der mit dem oberen Teil des Gehäuses (6) fest verbunden ist, wobei der Stift in der Aussparung (5) gemäß einer Achse, die im Wesentlichen parallel zur Achse (A) verläuft, verschiebbar montiert ist, wobei die Kopfstütze (1) des Weiteren reversible Mittel zur Blockierung (11) der Verschiebung des Gehäuses (6) in Bezug auf das Tragelement (3) und/oder des Stiftes (10) in Bezug auf die Aussparung (5) umfasst, wobei die Kopfstütze **dadurch gekennzeichnet ist, dass** die Mittel zur Blockierung (11) der Verschiebung des Gehäuses (6) in Bezug auf das Tragelement (3) eine Zahnstange (12) umfassen, die mit dem Tragelement (3) fest verbunden ist, und die sich gemäß einer Richtung erstreckt, die im Wesentlichen parallel zur Achse (A) verläuft, wobei die Mittel zur Blockierung (11) des Weiteren ein Teil zum Zusammenwirken (13) mit der Zahnstange (12) umfassen, wobei das Teil mit dem Gehäuse (6) fest verbunden ist, wobei das Teil drehbar ist zwischen einer Einstellposition, in welcher es von der Zahnstange (12) entfernt ist und die Verschiebung des Gehäuses (6) in Bezug auf das Tragelement (3) ermöglicht, so dass die Höheneinstellung der Kopfstütze (1) ermöglicht wird, und einer Blockierposition, in welcher es mit der Zahnstange (12) zusammenwirkt und die Verschiebung des Gehäuses (6) in Bezug auf das Tragelement (3) blockiert, so dass die Höhe der Kopfstütze (1) festgestellt wird, wobei die Länge der Zahnstange (12) den Bereich der Höheneinstellung der Kopfstütze (1) definiert.

2. Kopfstütze nach Anspruch 1, **dadurch gekennzeichnet, dass** sie des Weiteren ein Mittel zum Lösen (14) der Mittel zur Blockierung (11) umfasst, so dass die Verschiebung des Gehäuses (6) in Bezug auf das Tragelement (3) und/oder des Stiftes (10) in Bezug auf die Aussparung (5) freigegeben wird.

3. Kopfstütze nach Anspruch 2, **dadurch gekennzeichnet, dass** das Mittel zum Lösen (14) der Mittel zur Blockierung (11) einen Druckknopf (15) umfasst, der in der Nähe der Außenwand des Schaumkörpers angeordnet ist, wobei der Druckknopf angeordnet ist, um die Drehung des Teils zum Zusammenwirken (13) in seine Einstellposition zu bewirken, sobald er betätigt wird, wobei die Mittel zur Blockierung (11) der Verschiebung des Gehäuses (6) in Bezug auf das Tragelement (3) des Weiteren ein Mittel zur Rückstellung des Teils (13) in seine Blockierposition umfassen, wenn der Druckknopf (15) nicht betätigt wird.

4. Kopfstütze nach Anspruch 2 oder 3, **dadurch gekennzeichnet, dass** das Teil (13) des Weiteren in eine Montageposition bewegt werden kann, in welcher es von der Zahnstange (12) entfernt ist und noch unter diese hinuntergehen kann, so dass die Kopfstütze (1) in eine äußerst unterste Position zur Montage im Fahrzeug gebracht wird.

5. Kopfstütze nach einem der Ansprüche 1 bis 4, **dadurch gekennzeichnet, dass** die Mittel zur Blockierung (11) der Verschiebung des Stiftes (10) in Bezug auf die Aussparung (5) ein Blockierteil umfassen, das mit dem Gehäuse (6) fest verbunden ist, wobei das Blockierteil beweglich ist zwischen einer Einstellposition, in welcher das Blockierteil vom Stift (10) entfernt ist und die Verschiebung des Stiftes (10) in Bezug auf die Aussparung (5) ermöglicht, so dass die Höheneinstellung der Kopfstütze (1) ermöglicht wird, und einer Blockierposition, in welcher es mit dem Stift (10) zusammenwirkt und die Verschiebung des Stiftes (10) in Bezug auf die Aussparung (5) blockiert, so dass die Höhe der Kopfstütze (1) festgestellt wird.

6. Kopfstütze nach Anspruch 5, wenn dieser von Anspruch 2 abhängig ist, **dadurch gekennzeichnet, dass** das Mittel zum Lösen (14) der Mittel zur Blockierung (11) einen Druckknopf umfasst, der in der Nähe der Außenwand des Schaumkörpers angeordnet ist, wobei der Druckknopf angeordnet ist, um die Verschiebung des Blockierteils in seine Einstellposition zu bewirken, sobald er betätigt wird, wobei die Mittel zur Blockierung (11) der Verschiebung des Stiftes (10) in Bezug auf die Aussparung (5) des Weiteren ein Mittel zur Rückstellung des Blockierteils in seine Blockierposition umfassen, wenn der Druckknopf nicht betätigt wird.

7. Kopfstütze nach einem der Ansprüche 1 bis 6, **dadurch gekennzeichnet, dass** das Tragelement (3) ein Einblockteil (8) umfasst, das in einem Kasten angeordnet ist, wobei zwischen dem Einblockteil (8) und dem Kasten Räume vorgesehen sind, so dass das Durchführen funktioneller Elemente des Fahrzeuges durch die Räume ermöglicht wird.

8. Sitz eines Kraftfahrzeuges, umfassend eine Lehne (2) und eine Sitzfläche, **dadurch gekennzeichnet, dass** er eine Kopfstütze (1) nach einem der Ansprüche 1 bis 7 umfasst, wobei die Lehne (2) reversible Mittel zum Festhalten (17) der Kopfstütze (1) umfasst, wobei die Mittel in reversibler Weise mit den reversiblen Mitteln zur Befestigung (4) der Kopfstütze (1) an der Lehne zusammenwirken.

9. Sitz nach Anspruch 8, **dadurch gekennzeichnet, dass** die Mittel zur Befestigung (11) zumindest eine Lasche (18) umfassen, die mit dem Tragelement (3) fest verbunden ist, und die sich im Wesentlichen in längs verlaufender Richtung unter dem Element erstreckt, wobei die Lasche in reversibler Weise mit den Mitteln zum Festhalten (17) der Lehne (2) zusammenwirkt.

10. Sitz nach Anspruch 9, **dadurch gekennzeichnet, dass** das Tragelement (3) einen Druckknopf umfasst, der mit der Lasche (18) fest verbunden ist, wobei der Druckknopf angeordnet isL, um die Lasche (18) von den Mitteln zum Festhalten (17) der Lehne (2) zu lösen, um die Kopfstütze (1) von der Lehne (2) loszulösen, sobald er betätigt wird.

11. Sitz nach Anspruch 9, **dadurch gekennzeichnet, dass** die Mittel zum Festhalten (17) einen Sockel (19) umfassen, der im oberen Bereich der Lehne (2) vorgesehen ist, wobei das Tragelement (3) auf dem Sockel angeordnet ist, wobei der Sockel ein Festhalteteil (20) umfasst, das verschiebbar ist zwischen einer Festhalteposition, in welcher das Teil mit der Lasche (18) zusammenwirkt, so dass die Kopfstütze (1) an der Lehne (2) befestigt wird, und einer Freigabeposition, in welcher das Teil von der Lasche (18) entfernt ist, so dass die Kopfstütze (1) von der Lehne (2) losgelöst wird.
